(19) Europäisches Patentamt
European Patent Office
Office européen des brevets

(11) **EP 3 010 201 B1**

(12) **EUROPEAN PATENT SPECIFICATION**

(45) Date of publication and mention
of the grant of the patent:
**15.05.2019 Bulletin 2019/20**

(51) Int Cl.:
*H04L 29/06* ⁽²⁰⁰⁶·⁰¹⁾     *H04L 29/08* ⁽²⁰⁰⁶·⁰¹⁾

(21) Application number: **15188853.4**

(22) Date of filing: **07.10.2015**

(54) **SYSTEM AND METHOD FOR RANKING NAMED-DATA NETWORKING OBJECTS IN A CACHE**

SYSTEM UND VERFAHREN ZUR EINORDNUNG VON BENANNTEN DATENNETZWERKOBJEKTEN IN EINEM CACHESPEICHER

SYSTÈME ET PROCÉDÉ DE CLASSEMENT D'OBJETS DE RÉSEAUTAGE DE DONNÉES NOMMÉES DANS UNE MÉMOIRE CACHE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **16.10.2014 US 201414516450**

(43) Date of publication of application:
**20.04.2016 Bulletin 2016/16**

(73) Proprietor: **Cisco Technology, Inc.**
**San Jose, CA 95134 (US)**

(72) Inventor: **UZUN, Ersin**
**Campbell, CA California 95008 (US)**

(74) Representative: **Kazi, Ilya et al**
**Mathys & Squire LLP**
**The Shard**
**32 London Bridge Street**
**London SE1 9SG (GB)**

(56) References cited:
**US-A1- 2013 148 653     US-A1- 2014 281 505**

## Description

This invention was made with U.S. Government support under Contract No. CNS-1040822 awarded by the National Science Foundation (NSF) Future Internet Architectures (FIA) program, Named Data Networking (NDN) project. The U.S. Government has certain rights in this invention.

## BACKGROUND

### Field

This disclosure is generally related to named data networking (NDN). More specifically, this disclosure is related to ranking Content Objects in a cache.

### Related Art

The proliferation of mobile computing and cellular networks is making digital content more mobile than ever before. People can use their smartphones to generate content, to consume content, or even to provide Internet access to other computing devices that generate or consume content. Oftentimes, a device's network location can change as a person takes this device to a new physical location. This can make it difficult to communicate with this device under a traditional computer network (e.g., the Internet) when the device's new network location is not known.

To solve this problem, information centric network (ICN) architectures have been designed to facilitate accessing digital content based on its name, regardless of the content's physical or network location. Named data networking (NDN) is one example of an Information Centric Networking (ICN). Unlike traditional networking, such as Internet Protocol (IP) networks where packets are forwarded based on an address for an end-point, the NDN architecture assigns a routable name (e.g., an address) to content itself so the that content can be retrieved from any device that hosts the content.

A typical NDN architecture forwards two types of packets: Interests and Content Objects. Interests include a name for a piece of named data, and serve as a request for the piece of named data. Content Objects, on the other hand, typically include a payload, and are only forwarded along a network path that has been traversed by an Interest with a matching name, and traverse this path in the reverse direction taken by the Interest packet. Typical NDN architectures only send Content Objects as a response to an Interest packet; Content Objects are not sent unsolicited.

NDN architectures can ensure content authenticity by allowing publishers to sign content, which allows consumers to verify content signatures. However, typical NDN routers do not perform content signature verification on Content Objects to avoid incurring additional network latency. Some NDN routers also maintain a Content Store that caches content to minimize the round-trip-delay, by returning a cached Content Object whenever possible. However, content caching in routers opens the door for denial-of-service (DoS) attacks.

One such DoS attack involves content poisoning, where an adversary injects fake content into a router's cache to flood the NDN network with fake content that blocks access to legitimate content of the same name. Although consumers can detect fake content by performing signature verification, a typical NDN architecture does not search for fake content to remove from cache.

Clients can avoid becoming victim to content poisoning attacks by enforcing the use of self-certifying content names. The client can issue Interests that refer to content by its full name, including its hash. However, this is only possible if the client knows the content's hash value ahead of time. The client may not be able to enforce use of self-certifying names for dynamically-generated content that can change frequently (e.g., a web page that's updated every minute), since any change in its content results in a new hash for the content.

US2014/0281505 discloses an apparatus and a method for determining, based on a digital signature, whether a content publisher is a trusted publisher.

US2013/0148653 discloses a method and an apparatus for determining a reputation score of a content source, based on traffic received from it.

## SUMMARY

The invention relates to a method, a medium storing instructions and a computer system as defined in independent claims 1, 2 and 3, respectively. Particular embodiments are defined in claims 4-9.

In some embodiments, the router belongs to a named data network (NDN), which is an example of an information centric network (ICN). In ICN (and NDN), each piece of content is individually named, and each piece of data is bound to a unique name that distinguishes the data from any other piece of data, such as other versions of the same data or data from other sources. This unique name allows a network device to request the data by disseminating a request or an Interest that indicates the unique name, and can obtain the data independent from the data's storage location, network location, application, and means of transportation. The following terms describe elements of an NDN architecture:

Content Object: A single piece of named data, which is bound to a unique name. Content Objects are "persistent," which means that a Content Object can move around within a computing device, or across different computing devices, but does not change. If any component of the Content Object changes, the entity that made the change creates a new Content Object that includes the updated content, and binds the new Content Object to a new unique name.

Unique Names: A name in an NDN is typically location independent and uniquely identifies a Content Object. A data-forwarding device can use the name or name prefix to forward a packet toward a network node that generates or stores the Content Object, regardless of a network address or physical location for the Content Object. In some embodiments, the name may be a hierarchically structured variable-length identifier (HSVLI). The HSVLI can be divided into several hierarchical components, which can be structured in various ways. For example, the individual name components pare, home, ndn, and test.txt can be structured in a left-oriented prefix-major fashion to form the name "/parc/home/ndn/test.txt." Thus, the name "/parc/home/ndn" can be a "parent" or "prefix" of "/parc/home/ndn/test.txt." Additional components can be used to distinguish between different versions of the content item, such as a collaborative document.

In some embodiments, the name can include an identifier, such as a hash value that is derived from the Content Object's data (e.g., a checksum value) and/or from elements of the Content Object's name. A description of a hash-based name is described in U.S. Patent Application No. 13/847,814 (entitled "ORDERED-ELEMENT NAMING FOR NAME-BASED PACKET FORWARDING," by inventor Ignacio Solis, filed 20 March 2013. A name can also be a flat label. Hereinafter, "name" is used to refer to any name for a piece of data in a name-data network, such as a hierarchical name or name prefix, a flat name, a fixed-length name, an arbitrary-length name, or a label (e.g., a Multiprotocol Label Switching (MPLS) label).

Interest: A packet that indicates a request for a piece of data, and includes a name (or a name prefix) for the piece of data. A data consumer can disseminate a request or Interest across an information-centric network, which NDN routers can propagate toward a storage device (e.g., a cache server) or a data producer that can provide the requested data to satisfy the request or Interest.

In some embodiments, the NDN or ICN system can include a content-centric networking (CCN) architecture. However, the methods disclosed herein are also applicable to other ICN architectures as well. A description of a CCN architecture is described in U.S. Patent Application No. 12/338,175 (entitled "CONTROLLING THE SPREAD OF INTERESTS AND CONTENT IN A CONTENT CENTRIC NETWORK," by inventors Van L. Jacobson and Diana K. Smetters, filed 18 December 2008).

In some embodiments, the router selects the Content Object to rank in response to storing the Content Object in a cache, receiving an Interest whose name matches a name or name prefix of the Content Object, or receiving an Interest that includes an exception for the Content Object.

In some embodiments, the router receives an Interest whose name is associated with multiple cached Content Objects, and selects, from the multiple cached Content Objects, a cached Content Object with a highest rank value. The router then returns the selected cached Content Object to satisfy the Interest.

In some embodiments, the router can determine that the Content Object is a new Content Object, and assigns a maximum rank value to the Content Object. The router can determine that the Content Object is a new Content Object, for example, by determining that the Content Object has not been returned to satisfy an Interest, and/or determining that an exclusion has not been received for the Content Object.

In some embodiments, the router selects one or more exclusion patterns for ranking the Content Object from a set of predetermined exclusion patterns. The set of predetermined exclusion patterns can include an exclusion-rate pattern, a time distribution pattern, and/or an excluding-interfaces pattern. The exclusion-rate pattern ranks the Content Object based on a rate at which the Content Object received exclusions. The time distribution pattern ranks the Content Object based on a time elapsed since the Content Object received an exclusion. The excluding-interfaces pattern that ranks the Content Object based on a fraction of local interfaces from which the Content Object received exclusions.

In some embodiments, while computing the rank value, the router computes a factor for each exclusion pattern, based on the set of exclusions for the Content Object. The router then computes an overall factor, *F*, based on the individual factors for each exclusion pattern, and computes the rank value using the overall factor, *F*.

In some variations on these embodiments, while computing the rank value, the router computes:

$$r_{n|H(C)}\big(t\big) = e^{\frac{-t}{F}}$$

Here, $r_{n|H(C)}$ designates the rank value for the Content Object, and $t$ designates the age of the Content Object in the cache.

## BRIEF DESCRIPTION OF THE FIGURES

FIG. 1 illustrates an exemplary network environment that facilitates selecting a highest-ranking cached Content Object to satisfy an Interest in accordance with an embodiment.
FIG. 2A illustrates an exemplary Interest in accordance with an embodiment.
FIG. 2B illustrates an exemplary Content Object in accordance with an embodiment.
FIG. 3 presents a flow chart illustrating a method for processing an Interest in accordance with an embodiment.
FIG. 4 presents a flow chart illustrating a method for updating a Content Object's rank value in accordance with an embodiment.
FIG. 5 presents a flow chart illustrating a method for computing a rank value for a cached Content Object in accordance with an embodiment.
FIGs. 6A-6B illustrate rank values for a set of exemplary Content Objects in accordance with an embodiment.
FIG. 7 illustrates an exemplary apparatus that facilitates selecting a highest-ranking cached Content Object to satisfy an Interest in accordance with an embodiment.
FIG. 8 illustrates an exemplary computer system that facilitates selecting a highest-ranking cached Content Object to satisfy an Interest in accordance with an embodiment.

In the figures, like reference numerals refer to the same figure elements.

## DETAILED DESCRIPTION

The following description is presented to enable any person skilled in the art to make and use the embodiments, and is provided in the context of a particular application and its requirements. Various modifications to the disclosed embodiments will be readily apparent to those skilled in the art, and the general principles defined herein may be applied to other embodiments and applications.

### Overview

Embodiments of the present invention provide a content-caching system that solves the problem of thwarting content poisoning attacks in NDN by providing a statistical content-ranking algorithm for router caches. The system computes rank values for cached Content Objects based on statistics collected from existing fields of Interest packets, and does not require any changes to the NDN architecture.

In a content poisoning attack, an adversary (e.g., a malicious entity) attempts to perform a denial-of-service (DoS) attack by "poisoning" a router's cache with fake content. Valid Content Objects contain a verifiable signature produced with the correct public key. Hence, a typical client device can detect a fake Content Object when the Content Object has an invalid signature (e.g., the signature verification algorithm returns an error), has a valid signature which is generated (signed) with the wrong key (e.g., not signed using the key of the purported producer), or has a mal-formed signature field. However, typical routers do not perform signature verification at line speed, as doing so would burden the router's processing resources by utilizing them to fetch, parse and verify public keys. Also, since trust is always application-dependent, it is not necessary for routers (especially backbone routers) to be involved in the specifics of trust management. Adversaries attempt to exploit this lack of verification across NDN routers to block access to real data by causing many of these routers to cache and serve fake versions of this content.

In some embodiments, a router's cache can include multiple Content Objects that can satisfy an Interest, especially during a poisoning attack. In this situation, it is possible that the router may return a fake Content Object, even when a legitimate Content Object exists in the cache. If the client does receive a fake Content Object, the client may re-issue the Interest for the Content Object, but this time identifying the fake Content Object in an "exclude" field of the Interest. The client may also re-issue the Interest to exclude an unsatisfactory Content Object, even though the Content Object carries otherwise valid content. The content-caching system can use the exclude field to avoid returning Content Object that the client knows it does not want.

In some embodiments, the content-caching system analyzes the exclusions received for a cached Content Object against one or more exclusion patterns to rank the cached Content Object, and does so to rank valid Content Objects higher that fake or unsatisfactory Content Objects. This allows the router to best satisfy an Interest when multiple matching Content Objects exist in the cache, without validating the Content Object, by returning a Content Object with a highest rank value.

Hereinafter, the term "fake" or "fake content" refers to Content Objects injected by a malicious entity. An "adversary" is a malicious NDN entity (or a collaborating group of malicious entities) capable of injecting content into the network. "Content poisoning" describes an attack where an adversary injects fake content into router caches at one or more NDN routers. Also, an "unsatisfactory" Content Object is an otherwise valid Content Object that does not satisfy the consumer's needs.

In some embodiments, the content-caching system can assign each new Content Objects a maximum rank value (e.g., the rank value of 1), and, as time elapses, this rank value may gradually decrease. This gives priority to newer cached content over older content. In addition, the rank of a specific Content Object can depend on the number of times it was excluded, and its time distribution. For example, the content-caching system can assign a lower rank to Content Objects with many recent exclusions, than to a Content Object with fewer and older exclusions. This safeguards against blocking less-desirable, yet valid, Content Objects that may receive few exclusions over time from clients that are not satisfied with the Content Object's content or version (e.g., an older content version). On the other hand, the content-caching system can penalize a Content Object which has been excluded by Interests arriving on multiple interfaces, as such a scenario indicates a higher likelihood of there being something wrong with the Content Object.

## Exemplary Network Environment

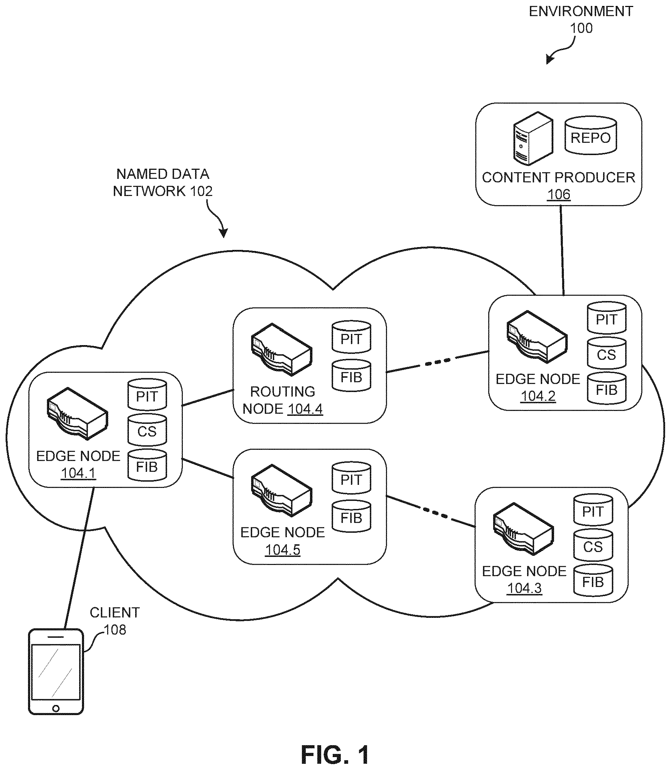

FIG. 1 illustrates an exemplary network environment 100 that facilitates selecting a highest-ranking cached Content Object to satisfy an Interest in accordance with an embodiment. Specifically, network environment 100 can include a named data network (NDN) 102 whose member devices can include a content producer 106, a personal computing device 108, and one or more NDN routing nodes 104 that can forward Interests and Content Objects across NDN 102.

Unlike Internet Protocol (IP) networks where packets are forwarded based on a network address for an end-point of communication, NDN 102 forwards Interest packets based on a name for a piece of content, regardless of which end-point device hosts the content. There are two types of packets in NDN: Interests and Content Objects. NDN communication adheres to the pull model, where a Content Object is delivered to consumers upon an explicit request. The terms Content Object, content packet, and content are hereinafter used interchangeably.

Hence, NDN 102 does not forward packets based on a destination address for an endpoint. Rather, any NDN node (e.g., content producer 106) can host and serve Content Objects. Producer-originated content signatures allows client 108 to authenticate a received Content Object, regardless of the NDN node that served this Content Object. As mentioned above, consumers must verify content signatures, while routers may forego signature verification that can be computationally expensive.

Client 108 (e.g., a content consumer) can request a Content Object by issuing an Interest packet that specifies a name or name prefix for the Content Object. The content name is composed of one or more variable-length name components that are opaque to the network. If an NDN node stores or can produce a Content Object that "satisfies" the Interest, this NDN node returns the Content Object. However, if a routing node 104 receives a Content Object with a name *n* when no pending Interest exists for that name, the routing node interprets the Content Object as "unsolicited" and discards the Content Object.

Content producer 106 can include any device that produces and publishes (as well as signs) content, and client 108 (e.g., a consumer) can include any device that issues an Interest for content. Routing nodes and edge nodes 104 can include any router that routes an Interest toward a content producer associated with the Interest's name, and forwards a corresponding Content Object toward a client that disseminated the Interest. Note that content producer 106 and/or client device 108 can be any type of a computing device, including a mobile computing device, such as a laptop computer, a tablet or slate computer, a smartphone, or a personal digital assistant (PDA), or a stationary computing device, such as a desktop computer or a home media server.

In some embodiments, CCN nodes 104 can include and a forwarding information base (FIB) and a pending Interest table (PIT). The FIB includes a routing table of name prefixes and corresponding outgoing interfaces that can be used to forward Interests. The PIT includes a table of outstanding (pending) Interests, and a set of corresponding incoming and outgoing interfaces associated with these Interests. Also, some CCN nodes (e.g., edge nodes 104.1-104.3) can include a cache or Content Store (CS) for caching Content Objects that can be used to satisfy Interests. A CS cache size for a routing node 104 depends on the resources available at routing node 104. Each routing node 104 independently determines what content to cache and for how long. In some embodiments, a Content Object can include a "freshness" field that specifies a timeout for the cached Content Object, which the CS can use to determine when to evict the Content Object. Upon receiving an Interest, the routing node first checks its CS to determine whether the routing node can satisfy this Interest locally.

Content producer 106, on the other hand, may include a FIB and a PIT, and a repository that stores (e.g., persistently or for a long-term period) a collection of Content Objects hosted by content producer 206. Device 108 may include a FIB and a PIT, and may include a CS as well as one or more repositories for storing persistent Content Objects.

In some embodiments, a malicious entity may attempt to perform a content poisoning attack across NDN 102 by anticipating the name, *n,* for Interests disseminated by client 108. This malicious entity may inject face content of name *n* at edge node 104.1 to prevent edge node 104.1 from returning a valid Content Object from the local CS, and to prevent edge node 104.1 from forwarding the Interest toward content producer 106 when a valid matching Content Object does not exist in the CS. The malicious entity can inject fake content into the network via compromised routers or other malicious/compromised nodes. For example, an adversary may consist of a malicious consumer $C_m$ and a malicious producer $P_m$ that have targeted a specific router 104.1, such that $C_m$ and $P_m$ may be connected to different interfaces of router 104.1. To perform the attack, malicious consumer $C_m$ sends an Interest having name *n,* and once router 104.1 receives this Interest and creates a PIT entry for the Interest, producer $P_m$ sends a fake Content Object to router 104.1 which is promptly cached. As a consequence, router 104.1 is pre-polluted with fake content, ready for the arrival of genuine Interests. Malicious producer $P_m$ may set the freshness of the fake content to a maximum value to maximize longevity of the attack.

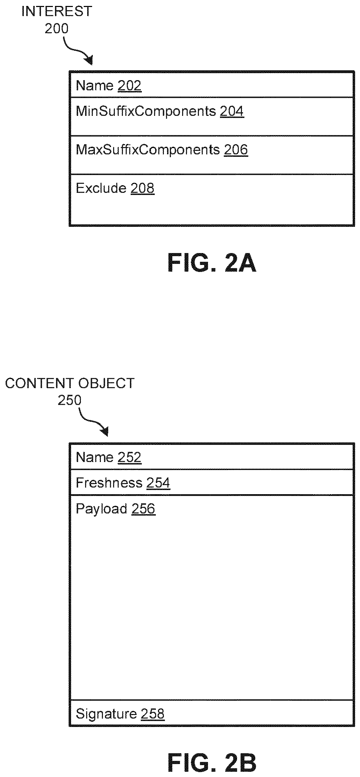

FIG. 2A illustrates an exemplary Interest 200 in accordance with an embodiment. Specifically, Interest 200 can include at least a Name field 202, a MinSuffixComponents field 204, a MaxSuffixComponents field 206, and an Exclude field 208. Name field 202 includes a name or name prefix for a Content Object or a collection of content, comprising a sequence of explicit name components. Name field 202 can also include an implicit digest component (e.g., a hash value) of a desired Content Object, which effectively provides a unique name for the desired Content Object. However, the digest component does not need to be present in some Interest packets, since NDN does not provide consumer nodes with a secure mechanism to learn a Content Object's hash before generating or disseminating an Interest for the Content Object.

- MinSuffixComponents 204 specifies a minimum number of name components, beyond those specified in the name, that are allowed to occur in a matching Content Object. MaxSuffixComponents 206 specifies a maximum number of name components, beyond those specified in the name, that are allowed to occur in matching content. The MinSuffixComponents 204 and MaxSuffixComponents 206 fields facilitate performing a longest-prefix matching lookup.

Exclude field 208 contains information about name components that must not occur in the name of returned Content Object. In some embodiments, exclude field 208 can be used to exclude a certain Content Object based on its hash, which is considered to be an implicit, last component of each content name.

FIG. 2B illustrates an exemplary Content Object 250 in accordance with an embodiment. Content Object 250 can include a Name field 252, a Freshness field 254, a Payload 256, and a Signature field 258. Similar to Interest 200, Name 252 includes a name for Content Object 250, comprising a sequence of explicit name components, such as a name prefix for Content Object 250 and a digest of Content Object 250.

Freshness 252 includes a time duration that the content producer recommends that Content Object 250 should be cached. The NDN routers can choose to evict Content Object 250 from cache when it has surpassed the time duration specified in freshness field 252, and/or can choose to evict Content Object 250 using any other local criteria. Payload 256 includes the content associated with name 252.

Signature 258 can include a public key signature, which can be generated by a publisher or content producer of Content Object 250 based on the Content Object 250, including all explicit components of name 250, one or more fields of Content Object 250 (e.g., freshness 254), and payload 256. Signature field 258 can also include a reference to a public key (e.g., referenced by the public key's NDN name) that a consumer can use to verify Content Object 250.

In some embodiments, each producer can have at least one public key, represented as a bona fide named Content Object signed by a trusted entity that issued the public key (e.g., a Certificate Authority (CA)). The name of a public key Content Object typically contains the "key" component as its last explicit component. For example, a key for one or more Content Objects associated with the name prefix "/ndn/GothamGazette/PublishedContent" can be signed by the key with name "/ndn/GothamGazette/PublishedContent/key." Moreover, in order for signature 258 to be valid (not just verifiable), the name of the public key (the private counterpart of which is used to sign Content Object 250) without the last explicit component needs to form a prefix of Name 252 for Content Object 250. For example, the key "/ndn/GothamGazette/PublishedContent/key" is valid for a Content Object named "/ndn/GothamGazette/PublishedContent/Sports/Headlines," but is not valid for Content Objects under the name prefix "/ndn/GothamGazette/Paywall/Content/."

## Ranking Content Objects

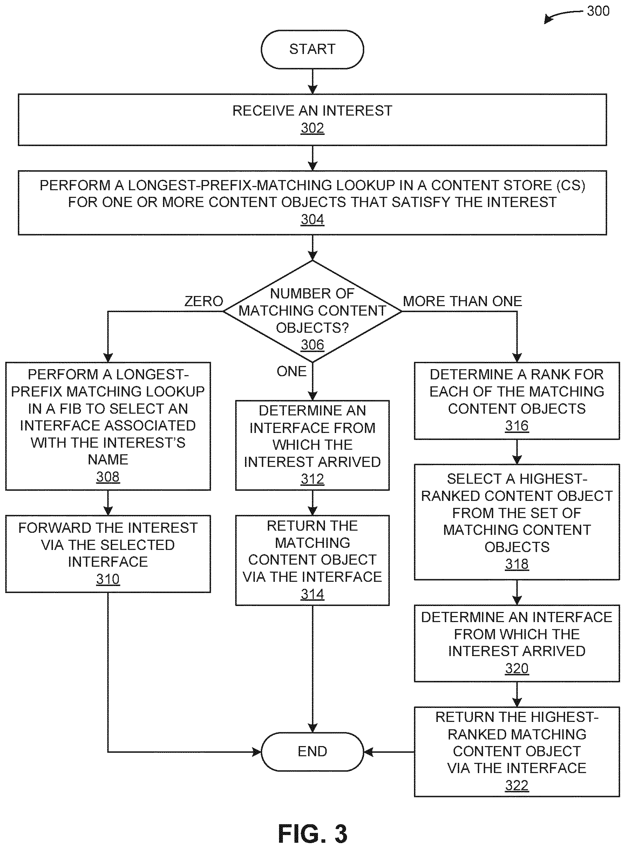

FIG. 3 presents a flow chart illustrating a method 300 for processing an Interest in accordance with an embodiment. During operation, a router (or any NDN device) can receive an Interest, which specifies a name or name prefix for a Content Object (operation 302). The router performs a longest-prefix-matching lookup operation in a local cache or Content Store (CS) to identify one or more Content Objects that satisfy the Interest (operation 304). Multiple matching Content Objects can exist, such as multiple Content Objects with the same name or name prefix, and different payloads. Hence, the router determines the number of matching Content Objects that exist in the cache or CS (operation 306).

If there are no matching Content Objects, the router can forward the Interest across the NDN by performing a longest-prefix-matching lookup in a forwarding information base (FIB) to select an interface associated with the Interest's name (operation 308), and forwards the Interest via the selected face (operation 310). On the other hand, if exactly one matching Content Object exists, the router can return the matching Content Object to satisfy the Interest by determining a face from which the Interest arrived (e.g., by performing a lookup operation in a pending Interest table (PIT)) (operation 312), and returning the matching Content Object via this Interface (operation 314).

However, if multiple matching Content Objects exist, the router makes a determination as to which Content Object may best satisfy the Interest before returning this Interest. For example, the router can determine a rank for each of the matching Content Objects (operation 316), and selects a highest-ranked Content Object from the set of matching Content Objects (operation 318). The router then determines a face from which the Interest arrived (operation 320), and returns the highest-ranked matching Content Object via this Interface (operation 322).

In some embodiments, the router ranks cached Content Objects so that valid Content Objects have a higher rank value than fake or malicious Content Objects. The rank value is a numeric value within a predetermined range, such as the range [0, 1]. All cached content starts with the highest possible value (e.g., a rank value of 1), and can decrease and/or increase within the predetermined range over time. This gives priority to newer cached Content Objects over older Content Objects. In addition, the rank of a specific content depends on one or more exclusion patterns, such as the number of times the Content Object was excluded by an Interest, when it was excluded, and via which interfaces.

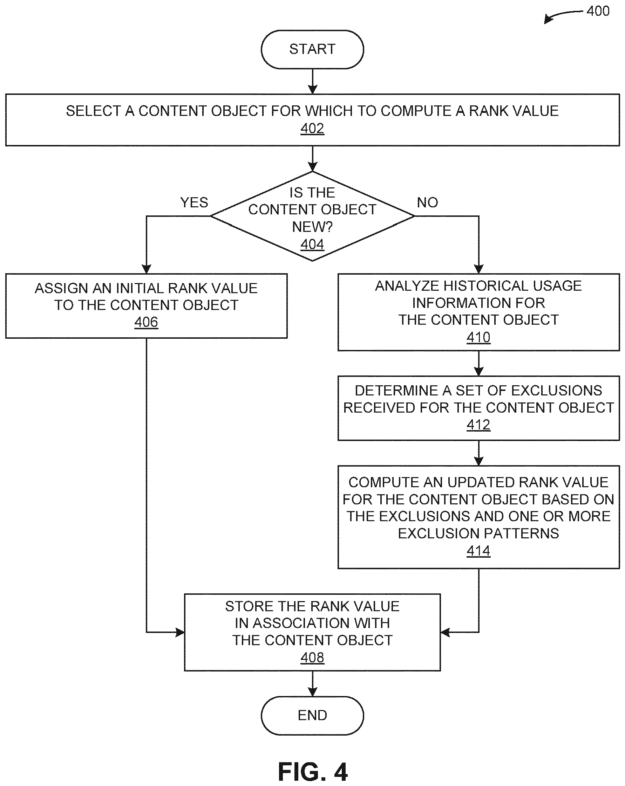

FIG. 4 presents a flow chart illustrating a method 400 for updating a Content Object's rank value in accordance with an embodiment. During operation, the cache-processing system (e.g., a router or any NDN device with a cache) can select a Content Object for which to compute a rank value (operation 402). In some embodiments, each unique Content Object is identified by a combination of the Content Object's name, $n$, and digest, $H(C)$. Hence, each unique Content Object is hereinafter denoted as the concatenation of the Content Object's name and digest: $n|H(C)$.

The system then determines if this Content Object is a new Content Object (operation 404). In some embodiments, a Content Object, $n|H(C)$, is considered to be new if the Content Object has not been cached in the past, if the current instance (and/or any prior instance) of the Content Object has not been used to satisfy an Interest, and/or if the current instance (and/or any prior instance) of the Content Object has not received an exclusion.

If the Content Object is new, the system assigns a predetermined initial rank value to the Content Object (operation 406). In some embodiments, this predetermined initial rank value is the highest possible rank value in the range of allowable rank values (e.g., the maximum value 1 in the rank value range [0, 1]). The system then stores the rank value, for example, in a database or in a cache (e.g., a Content Store) in association with the Content Object (operation 408).

However, if the Content Object is not new, the system can analyze historical usage information for the Content Object (operation 410), which can include information on the Interests received in the past that include the Content Object's name, from which interfaces these Interests were received, and the exclusions listed in these Interests. The system then determines a set of exclusions received for selected the Content Object (operation 412), such as by selecting the exclusions that explicitly specify the selected Content Object's digest (e.g., a hash value), and ignoring exclusions that do not specify the selected Content Object's digest. In some embodiments, the exclusions are for the current instance of the Content Object. In some variations to these embodiments, the exclusions can also include exclusions received for a prior instance of the same Content Object, such as before or after the prior instance of the Content Object was evicted from the cache or CS.

The system then computes an updated rank value for the Content Object based on the set of exclusions and one or more exclusion patterns (operation 414), and stores the rank value in association with the Content Object (operation 408). In some embodiments, these exclusion patterns can include a number of times the Content Object was excluded within a given time window (e.g., an exclusion rate), a time distribution for these exclusions, and a ratio of the relevant interfaces that have issued an exclusion (e.g., an excluding-interfaces ratio).

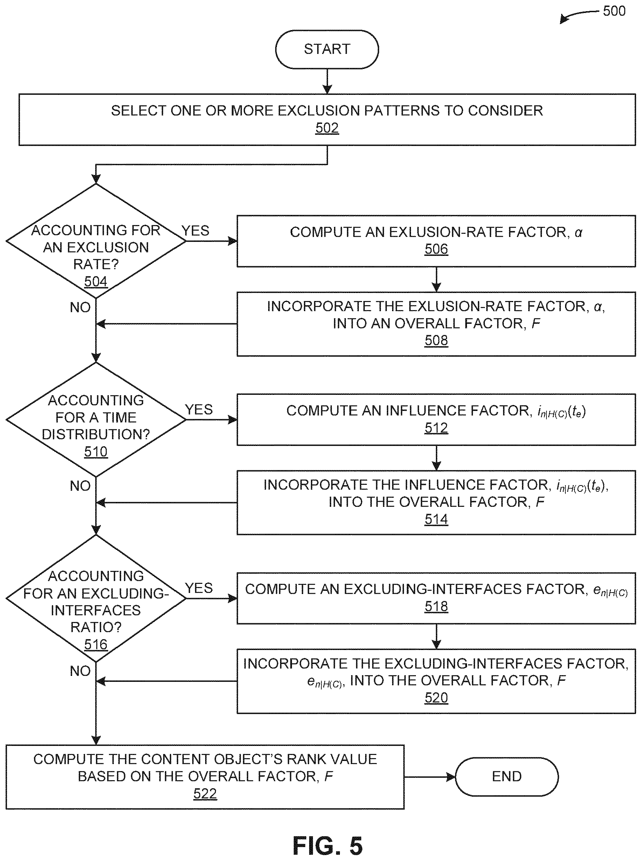

FIG. 5 presents a flow chart illustrating a method 500 for computing a rank value for a cached Content Object in accordance with an embodiment. During operation, the system can select one or more exclusion patterns to consider (operation 502). In some embodiments, the set of possible exclusion patterns can include an "exclusion rate," a "time distribution," and an "excluding-interfaces ratio." The "exclusion rate" pattern accounts for a number of times the Content Object was excluded within a given time window, the "time distribution" pattern accounts for a time distribution for these exclusions, and the "excluding-interfaces ratio) accounts for a ratio of the relevant interfaces that have issued an exclusion.

If the system is accounting for an exclusion rate (operation 504), the system computes an exclusion-rate factor, $\alpha$, for the Content Object (operation 506), and incorporates the exclusion-rate factor into an overall factor $F$ (operation 508). For example, the overall factor $F$ can be a product of one or more factors $\{F_1, F_2, ... F_m\}$.

To compute the exclusion-rate factor, $\alpha$, the system first determines a number of exclusions, $E$, for the Content Object $n|H(C)$ (hereinafter denoted as $E_{n|H(C)}$). The system can determine, $E_{n|H(C)}$, by determining a number of Interests that include an exclusion for $n|H(C)$ (e.g., based on Interests the system has received for any Content Objects that include the name or name prefix $n$).

The system also determines a total number of requests, $Q_n$, for Content Object $C$, (e.g., based on Interests received whose name include $n$, with or without the digest $H(C)$). The system can then compute the exclusion rate, $R_{n|H(C)}$, by computing:

$$R_{n|H(C)} = E_{n|H(C)}/Q_n \qquad (1)$$

The system can then compute the exclusion-rate factor, $\alpha$, by computing:

$$\alpha = \alpha_{t_o} - \left( R_{n|H(C)} \times \alpha_{t_o} \right) \qquad (2)$$

Note that in expression (2), the exclusion rate, $\alpha$, depends on the exclusion rate at time $t_0$ (e.g., at the time the Content Object $n|H(C)$ was added to the cache).

In some embodiments, the system can determine $\alpha_{t_o}$ based on a model for the ranking degradation pattern:

$$r_{n|H(C)}(t) = e^{\frac{-t}{\alpha}}, \; where \; t \in [0, \, t_{t_o}] \qquad (3)$$

In expression (3), $t$ is the age of Content Object $n|H(C)$ in the cache, and $t_{t_o}$ is an elapsed time since the Content Object was added to the cache (e.g., content freshness). Hence, the system can compute $\alpha_{t_o}$ by computing:

$$r_{t_o} = e^{\frac{-t_o}{\alpha_{t_o}}} \qquad (4)$$

In expression (4), $r_{t_o}$ is the rank value assigned to the Content Object when it was added to the cache (e.g., the maximum rank value).

If the system is accounting for a time distribution (operation 510), the system computes an influence factor, $i_n|_{N(C)}(t_e)$, for the Content Object (operation 512), and incorporates the influence factor into the overall factor $F$ (operation 514). To compute the influence factor, $i_n|_{H(C)}(t_e)$, the system can compute:

$$i_{n|H(C)}(t_e) = 1 - \left( e^{\frac{-t_e}{\beta}} \right) \qquad (5)$$

In expression (5), $t_e$ designates an elapsed time since the last exclusion was received for the Content Object $n|H(C)$, and $\beta$ is a factor reflecting how fast the effect of the latest exclusion on the Content Object degrades over time.

In some embodiments, the influence factor has the range $i_n|_{H(C)}(t_e) \in [0, 1]$, where $i_n|_{H(C)}(t_e) = 1$ when the latest exclusion has a minimal effect on the Content Object's ranking. A larger $\beta$ requires more time to elapse before an exclusion has a minimal effect on the Content Object's ranking. Hence, a system administrator can preconfigure this maximum elapsed time as $t_{mw}$, and the system can compute $\beta$ by setting $t = t_{mw}$ and setting $i_n|_{H(C)}(t_e) = 1$.

If the system is accounting for an excluding-interfaces ratio (operation 510), the system computes an excluding-interfaces factor, $e_n|_{H(C)}$, for the Content Object (operation 512), and incorporates the excluding-interfaces factor into the overall factor $F$ (operation 514). The system can compute the excluding-interfaces factor, $e_n|_{H(C)}$, by computing:

$$e_{n|H(C)} = \begin{cases} \dfrac{f_s - f_e}{f_s} & \text{if } f_s \geq f_e \\ 1 & \text{otherwise} \end{cases} \qquad (6)$$

In expression (6), $f_s$ is the number of interfaces on which the router previously served the Content Object $n|H(C)$, and

has the range $f_s \in [0, f_n]$, wherein $f_n$ is the total number of interfaces of the router. Also, $f_e$ is the number of interfaces on which the router received Interests that exclude the Content Object $n|H(C)$, and has the range $f_e \in [1, f_n]$. In some embodiments, $f_e$ cannot have a value of zero because for ranking to exist, the router needs to have received an Interest for and have served the Content Object on at least one interface.

In some embodiments, $e_n|_{H(C)} \in [0, 1]$, wherein $e_n|_{H(C)} = 1$ indicates that the router has not received an exclusion for Content Object $n|H(C)$. It is possible for $f_e$ to exceed $f_s$, which can occur when the router receives an Interest that excludes the Content Object on an interface through which the router has not served the current instance of the Content Object $n|H(C)$. This can occur, for example, due to routing changes across the network topology, when a client device that previously consumed the Content Object $n|H(C)$ has moved to a new network location, and/or cache replacement of the Content Object. Cache replacement can occur when a previous instance of the Content Object $n|H(C)$ was previously requested by a client, cached by the router (e.g., after forwarding the Interest to a publisher), and later flushed from the cache. Note that expression (6) caps the excluding-interfaces factor, $e_n|_{H(C)}$, to 1 when $f_e > f_s$.

Once the system has accounted for the one or more selected exclusion patterns, the system computes the Content Object's rank value based on the overall factor, $F$ (operation 522). For example, the system can compute the rank value by computing:

$$r_{n|H(C)}(t) = e^{\frac{-t}{F}} \qquad (7)$$

In expression (7), $t$ is the age of Content Object $n|H(C)$ in the cache, and $t_{t_o}$ is an elapsed time since the Content Object was added to the cache (e.g., content freshness).

For example, if the system is only accounting for the exclusion rate, then the overall factor $F$ becomes:

$$F = \alpha = \alpha_{t_o} - \left( R_{n|H(C)} \times \alpha_{t_o} \right) \qquad (8)$$

Hence, the Content Object's rank becomes:

$$r_{n|H(C)}(t) = e^{\frac{-t}{\alpha_{t_o} - \left( R_{n|H(C)} \times \alpha_{t_o} \right)}} \qquad (9)$$

As another example, if the system is accounting for the exclusion rate *and* the time distribution, then the overall factor $F$ becomes:

$$\begin{aligned} F &= i_{n|H(C)}(t_e) \times \alpha \\ &= i_{n|H(C)}(t_e) \times \left[ \alpha_{t_o} - \left( R_{n|H(C)} \times \alpha_{t_o} \right) \right] \end{aligned} \qquad (10)$$

Hence, the Content Object's rank becomes:

$$r_{n|H(C)}(t) = e^{\frac{-t}{i_{n|H(C)}(t_e) \times \left[ \alpha_{t_o} - \left( R_{n|H(C)} \times \alpha_{t_o} \right) \right]}} \qquad (11)$$

Moreover, if the system is accounting for all three exclusion patterns (e.g., the exclusion rate, the time distribution, and the excluding-interfaces ratio), then the overall factor $F$ becomes:

$$\begin{aligned} F &= e_{n|H(C)} \times i_{n|H(C)}(t_e) \times \alpha \\ &= e_{n|H(C)} \times i_{n|H(C)}(t_e) \times \left[ \alpha_{t_o} - \left( R_{n|H(C)} \times \alpha_{t_o} \right) \right] \end{aligned} \qquad (12)$$

Hence, the Content Object's rank becomes:

$$r_{n|H(C)}(t) = e^{\frac{-t}{e_{n|H(C)} \times i_{n|H(C)}(t_e) \times \left[\alpha_{t_o} - \left(R_{n|H(C)} \times \alpha_{t_o}\right)\right]}} \qquad (13)$$

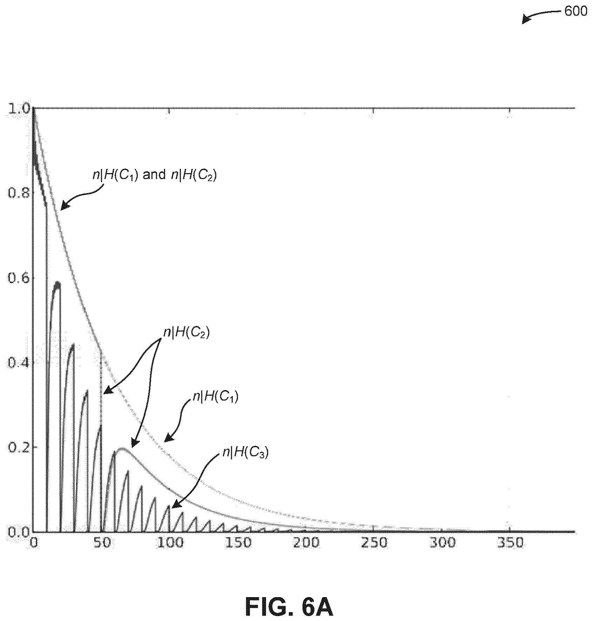

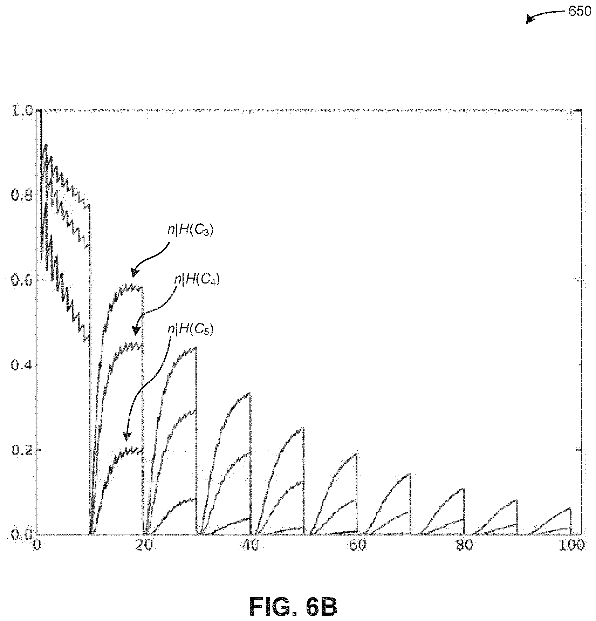

FIGs. 6A-6B illustrate rank values for a set of exemplary Content Objects in accordance with an embodiment. Specifically, Figures 6A and 6B illustrate ranking degradation patterns of five Content Objects with name $n$: $n|H(C_1)$, $n|H(C_2)$, $n|H(C_3)$, $n|H(C_4)$, and $n|H(C_5)$. These rank-degradation patterns are a result of a router computing rank values according to expression (13), which accounts for exclusion rates for cached Content Objects, the time distribution of exclusions, and the excluding-interfaces ratio. Content Objects $n|H(C_1)$, $n|H(C_2)$, $n|H(C_3)$, $n|H(C_4)$, and $n|H(C_5)$, receive exclusions according to Table 1.

**Table 1**

| Parameter | $n|H(C_1)$ | $n|H(C_2)$ | $n|H(C_3)$ | $n|H(C_4)$ | $n|H(C_5)$ |
|---|---|---|---|---|---|
| Content | $C_1$ | $C_2$ | $C_3$ | $C_4$ | $C_5$ |
| Name | $n$ | $n$ | $n$ | $n$ | $n$ |
| Digest | $H(C_1)$ | $H(C_2)$ | $H(C_3)$ | $H(C_4)$ | $H(C_5)$ |
| $t$ | [0, 400], one sample every 100 *msec* | | | | |
| freshness | 400 | | | | |
| $r_{to}$ | 0.001 | | | | |
| $Q_n$ | 1 | 1 when $t \in [50, 400]$, and 2 when $t \in [50, 400]$ | increased by one every 10 sec | | |
| $E_{n|H(C)}$ | 0 | 1 when t $t \in [0, 50]$, and 2 when $t \in [50, 400]$ | increased by one every 10 sec | | |
| $t_{mw}$ | 400 | | | | |
| $t_e$ | $\infty$ | $\infty$ when $t \in [0,50]$, and increased by one ever 1 sec when t>50 | [0, 10], increased by one every 1 sec, and reset every 10 sec | | |
| $f_n$ | 4 | | | | |
| $f_e$ | 0 | 0 when $t \in [0,50]$, and 1 when $t \in [50, 400]$ | 1 | 2 | 3 |

In some embodiments, a Content Object's ranking drops to a very low value (e.g., to zero, or near zero) when the router receives an exclusion for the Content Object, and the ranking increases again gradually according to the influence factor, $i_n|_{H(C)}(t_e)$, of expression (5). For example, when t <= 50 seconds in Figure 6A, both $n|H(C_1)$ and $n|H(C_2)$ have equal ranking values, which are higher than the ranking values for Content Objects $n|H(C_3)$, $n|H(C_4)$, and $n|H(C_5)$. However, the ranking of Content Object $n|H(C_2)$ decreases more than that of $n|H(C_1)$ at t = 50 seconds, after the router receives an exclusion for $n|H(C_2)$ via one interface. As another example, in FIG. 6B, the repetitive pattern of Content Objects $n|H(C_3)$, $n|H(C_4)$, and $n|H(C_5)$ at 10 second intervals occurs because the router receives exclusions for these Content Objects every 10 seconds.

FIG. 6B also illustrates the effect of varying $f_e$ on the excluding-interfaces factor, $e_n|_{H(C)}$, of expression (6). For example, the router receives exclusions for Content Object $n|H(C_5)$, via three different interfaces, but receives the same number and rate of exclusions for Content Object $n|H(C_3)$ via only one interface (and for $n|H(C_4)$ via only two interfaces). Because the router receives exclusions for $n|H(C_5)$, via more interfaces, the excluding-interfaces factor ($e_n|_{H(C)}$) caused expression (6) to produce a lower rank value for Content Object $n|H(C_5)$, than that of Content Objects $n|H(C_3)$ and $n|H(C_4)$.

Hence, Figures. 6A and 6B illustrate that routers generally rank newer content higher than older content of the same name or name prefix. This configuration has the benefit of giving newer content a higher cache-read priority to allow this content to be distributed and disseminated in a timely manner. Moreover, in cases where there are none or few malicious consumers, the newer content is less likely to be fake. This is due to the fact that routers try to satisfy Interests from their caches whenever possible, and forward an Interest toward the content producer when matching content does not exist in the cache.

Figures 6A and 6B also illustrate that for as long as a router's cache contains a valid version of content, the router is likely to continue to serving this content over fake content. This remains true for as long as there are significantly more valid consumers than malicious consumers, which allows the router to typically rank the valid content higher than fake content. The router is not likely to receive enough exclusions for the valid content from enough interfaces to rank the valid content lower than that of fake content.

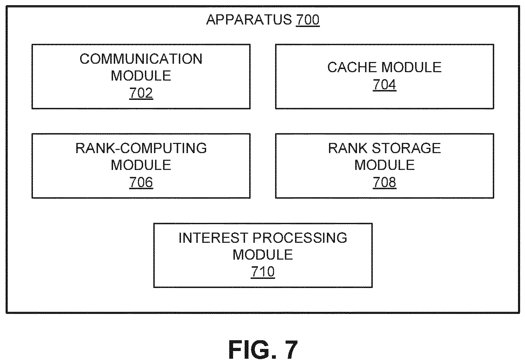

FIG. 7 illustrates an exemplary apparatus 700 that facilitates selecting a highest-ranking cached Content Object to satisfy an Interest in accordance with an embodiment. Apparatus 700 can comprise a plurality of modules which may communicate with one another via a wired or wireless communication channel. Apparatus 700 may be realized using one or more integrated circuits, and may include fewer or more modules than those shown in FIG. 7. Further, apparatus 700 may be integrated in a computer system, or realized as a separate device which is capable of communicating with other computer systems and/or devices. Specifically, apparatus 700 can comprise a communication module 702, a cache module 704, a rank-computing module 706, a rank storage module 708, and an Interest processing module 710.

In some embodiments, communication module 702 can receive and/or forward Interest messages and Content Objects over an information centric network, such as a named data network. Cache module 704 can cache Content Objects, and rank-computing module 706 can analyze exclusions received for a Content Object to compute a rank value for the Content Object. Rank storage module 708 can store the rank value in association with the Content Object. Interest processing module 710 can process an Interest by selecting, from one or more Content Objects whose name or name prefix includes the Interest's name, a Content Object which has a highest rank value, and returning this Content Object to satisfy the Interest.

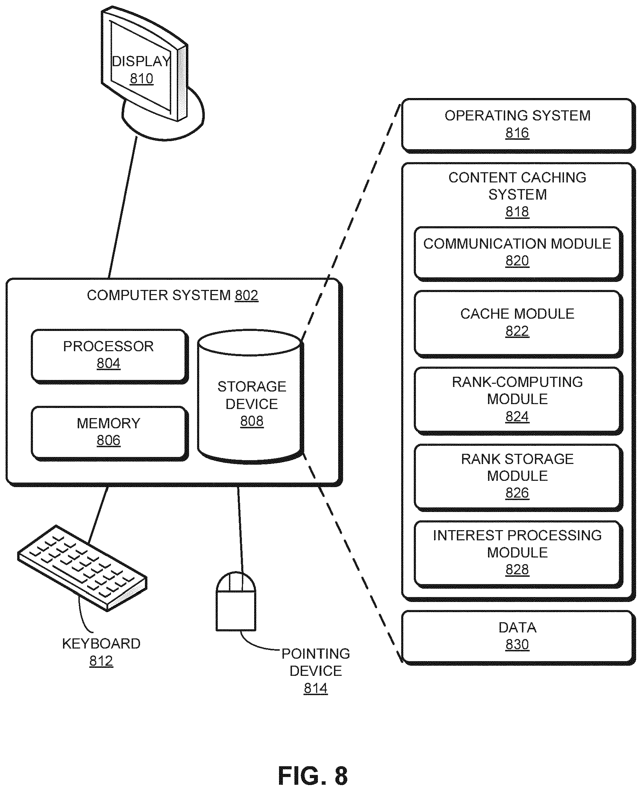

FIG. 8 illustrates an exemplary computer system 802 that facilitates selecting a highest-ranking cached Content Object to satisfy an Interest in accordance with an embodiment. Computer system 802 includes a processor 804, a memory 806, and a storage device 808. Memory 806 can include a volatile memory (e.g., RAM) that serves as a managed memory, and can be used to store one or more memory pools. Furthermore, computer system 802 can be coupled to a display device 810, a keyboard 812, and a pointing device 814. Storage device 808 can store operating system 816, content-caching system 818, and data 830.

Content-caching system 818 can include instructions, which when executed by computer system 802, can cause computer system 802 to perform methods and/or processes described in this disclosure. Specifically, content-caching system 818 may include instructions for receiving and/or forwarding Interest messages and Content Objects over an information centric network, such as a named data network (communication module 820). Further, content-caching system 818 can include instructions for caching Content Objects (cache module 822), and can include instructions for analyzing exclusions received for a Content Object to compute a rank value for the Content Object (rank-computing module 824).

Content-caching system 818 can include instructions for storing the rank value in association with the Content Object (rank storage module 826). Content-caching system 818 can also include instructions for processing an Interest by selecting, from one or more Content Objects whose name or name prefix includes the Interest's name, a Content Object which has a highest rank value, and returning this Content Object to satisfy the Interest (Interest processing module 828).

Data 830 can include any data that is required as input or that is generated as output by the methods and/or processes described in this disclosure. Specifically, data 830 can store at least a set of cached Content Objects, and a rank value for each cached Content Object.

The data structures and code described in this detailed description are typically stored on a computer-readable storage medium, which may be any device or medium that can store code and/or data for use by a computer system. The computer-readable storage medium includes, but is not limited to, volatile memory, non-volatile memory, magnetic and optical storage devices such as disk drives, magnetic tape, CDs (compact discs), DVDs (digital versatile discs or digital video discs), or other media capable of storing computer-readable media now known or later developed.

The methods and processes described in the detailed description section can be embodied as code and/or data, which can be stored in a computer-readable storage medium as described above. When a computer system reads and executes the code and/or data stored on the computer-readable storage medium, the computer system performs the methods and processes embodied as data structures and code and stored within the computer-readable storage medium.

Furthermore, the methods and processes described above can be included in hardware modules. For example, the hardware modules can include, but are not limited to, application-specific integrated circuit (ASIC) chips, field-programmable gate arrays (FPGAs), and other programmable-logic devices now known or later developed. When the hardware modules are activated, the hardware modules perform the methods and processes included within the hardware modules.

The foregoing descriptions of embodiments of the present invention have been presented for purposes of illustration and description only. They are not intended to be exhaustive or to limit the present invention to the forms disclosed. Accordingly, many modifications and variations will be apparent to practitioners skilled in the art. Additionally, the above disclosure is not intended to limit the present invention. The scope of the present invention is defined by the appended claims.

**Claims**

1.  A computer-implemented method, comprising:

    selecting a Content Object in an Information Centric Network (ICN) to rank;
    analyzing, by a forwarding device, historical usage information for the Content Object;
    determining, from the historical usage information, a set of exclusions received for the Content Object, wherein each exclusion relates to an Interest including an exclusion for the Content Object being returned in response to the Interest;
    computing a rank value for the Content Object, based on the set of exclusions for the Content Object and one or more predetermined exclusion patterns;
    storing the rank value in association with the Content Object;
    receiving an Interest whose name is associated with multiple cached Content Objects;
    selecting, from the multiple cached Content Objects, a cached Content Object with a highest rank value; and
    returning the selected cached Content Object to satisfy the Interest.

2.  A non-transitory computer-readable storage medium storing instructions that when executed by a computer cause the computer to perform a method:

    selecting a Content Object in an Information Centric Network (ICN) to rank;
    analyzing, by a forwarding device, historical usage information for the Content Object;
    determining, from the historical usage information, a set of exclusions received for the Content Object, wherein each exclusion relates to an Interest included an exclusion for the Content Object being returned in response to the Interest;
    computing a rank value for the Content Object, based on the set of exclusions for the Content Object and one or more predetermined exclusion patterns;
    storing the rank value in association with the Content Object;
    receiving an Interest whose name is associated with multiple cached Content Objects;
    selecting, from the multiple cached Content Objects, a cached Content Object with a highest rank value; and
    returning the selected cached Content Object to satisfy the Interest.

3.  A computer system, comprising:

    one or more processors;
    a memory; and
    a computer-readable medium coupled to the one or more processors storing instructions stored that, when executed by the one or more processors, cause the computing system to perform a method comprising:

        selecting a Content Object in an Information Centric Network (ICN) to rank;
        analyzing, by a forwarding device, historical usage information for the Content Object;
        determining, from the historical usage information, a set of exclusions received for the Content Object, wherein each exclusion relates to an Interest included an exclusion for the Content Object being returned in response to the Interest;
        computing a rank value for the Content Object, based on the set of exclusions for the Content Object and one or more predetermined exclusion patterns;
        storing the rank value in association with the Content Object;
        receiving an Interest whose name is associated with multiple cached Content Objects;
        selecting, from the multiple cached Content Objects, a cached Content Object with a highest rank value; and
        returning the selected cached Content Object to satisfy the Interest.

4.  The computer system of claim 3, further comprising, selecting the Content Object to rank in response to one or more of:

    storing the Content Object in a cache;
    receiving an Interest whose name matches a name or name prefix of the Content Object; and
    receiving an Interest that includes an exception for the Content Object.

5.  The computer system of claim 3, further comprising:

determining that the Content Object is a new Content Object; and
assigning a maximum rank value to the Content Object.

6. The computer system of claim 4, wherein determining that the Content Object is a new Content Object involves one or more of:

determining that the Content Object has not been returned to satisfy an Interest; and
determining that an exclusion has not been received for the Content Object.

7. The computer system of claim 3, further comprising selecting one or more exclusion patterns for ranking the Content Object, from a set of predetermined exclusion patterns including at least one of:

an exclusion-rate pattern that ranks the Content Object based on a rate at which the Content Object received exclusions;
a time distribution pattern that ranks the Content Object based on a time elapsed since the Content Object received an exclusion; and
an excluding-interfaces pattern that ranks the Content Object based on a fraction of local interfaces from which the Content Object received exclusions.

8. The computer system of claim 3, wherein computing the rank value involves:

computing a factor for each exclusion pattern, based on the set of exclusions for the Content Object;
computing an overall factor, $F$, based on the individual factors for each exclusion pattern; and
computing the rank value using the overall factor, $F$.

9. The computer system of claim 8, wherein computing the rank value further involves computing:

$$r_{n|H(C)}(t) = e^{\frac{-t}{F}}$$

wherein $r_{n|H(C)}$ designates the rank value for the Content Object, and wherein $t$ designates the age of the Content Object in the cache.

**Patentansprüche**

1. Ein computerimplementiertes Verfahren, das Folgendes umfasst:

Auswählen eines Content-Objekts in einem informationszentrierten Netzwerk (Information Centric Network, ICN) zum Einordnen;
Analysieren, durch eine Weiterleitungsvorrichtung, von historischen Nutzungsinformationen für das Content-Objekt;
Bestimmen, aus den historischen Nutzungsinformationen, eines für das Content-Objekt empfangenen Satzes Exklusionen, wobei sich jede Exklusion auf ein Interesse bezieht, einschließlich einer Exklusion dafür, dass das Content-Objekt als Reaktion auf das Interesse zurückgegeben wird;
Berechnen eines Einordnungswerts für das Content-Objekt, basierend auf dem Satz Exklusionen für das Content-Objekt und einem oder mehreren vorgegebenen Exklusionsmustern;
Speichern des Einordnungswerts in Assoziation mit dem Content-Objekt;
Empfangen eines Interesses, dessen Name mit mehreren gecachten Content-Objekten assoziiert ist;
Auswählen, aus den mehreren gecachten Content-Objekten, eines gecachten Content-Objekts mit einem höchsten Einordnungswert; und
Zurückgeben des ausgewählten gecachten Content-Objekts, um das Interesse zu befriedigen.

2. Ein nicht transitorisches computerlesbares Speicherungsmedium, das Anweisungen speichert, die, wenn von einem Computer ausgeführt, den Computer dazu veranlassen, ein Verfahren durchzuführen:

Auswählen eines Content-Objekts in einem informationszentrierten Netzwerk (ICN) zum Einordnen;

Analysieren, durch eine Weiterleitungsvorrichtung, von historischen Nutzungsinformationen für das Content-Objekt;

Bestimmen, aus den historischen Nutzungsinformationen, eines für das Content-Objekt empfangenen Satzes Exklusionen, wobei sich jede Exklusion auf ein Interesse bezieht, einschließlich einer Exklusion dafür, dass das Content-Objekt als Reaktion auf das Interesse zurückgegeben wird;

Berechnen eines Einordnungswerts für das Content-Objekt, basierend auf dem Satz Exklusionen für das Content-Objekt und einem oder mehreren vorgegebenen Exklusionsmustern;

Speichern des Einordnungswerts in Assoziation mit dem Content-Objekt;

Empfangen eines Interesses, dessen Name mit mehreren gecachten Content-Objekten assoziiert ist;

Auswählen, aus den mehreren gecachten Content-Objekten, eines gecachten Content-Objekts mit einem höchsten Einordnungswert; und

Zurückgeben des ausgewählten gecachten Content-Objekts, um das Interesse zu befriedigen.

3. Ein Computersystem, das Folgendes umfasst:

einen oder mehrere Prozessoren;

einen Speicher; und

ein computerlesbares Medium, das mit dem einen oder den mehreren Prozessoren gekoppelt ist, das gespeicherte Anweisungen, die, wenn von dem einen oder den mehreren Prozessoren ausgeführt, das Computersystem dazu veranlassen, ein Verfahren durchzuführen, das Folgendes umfasst:

Auswählen eines Content-Objekts in einem informationszentrierten Netzwerk (ICN) zum Einordnen;

Analysieren, durch eine Weiterleitungsvorrichtung, von historischen Nutzungsinformationen für das Content-Objekt;

Bestimmen, aus den historischen Nutzungsinformationen, eines für das Content-Objekt empfangenen Satzes Exklusionen, wobei sich jede Exklusion auf ein Interesse bezieht, einschließlich einer Exklusion dafür, dass das Content-Objekt als Reaktion auf das Interesse zurückgegeben wird;

Berechnen eines Einordnungswerts für das Content-Objekt, basierend auf dem Satz Exklusionen für das Content-Objekt und einem oder mehreren vorgegebenen Exklusionsmustern;

Speichern des Einordnungswerts in Assoziation mit dem Content-Objekt;

Empfangen eines Interesses, dessen Name mit mehreren gecachten Content-Objekten assoziiert ist;

Auswählen, aus den mehreren gecachten Content-Objekten, eines gecachten Content-Objekts mit einem höchsten Einordnungswert; und

Zurückgeben des ausgewählten gecachten Content-Objekts, um das Interesse zu befriedigen.

4. Computersystem gemäß Anspruch 3, das ferner das Auswählen des Content-Objekts zum Einordnen als Reaktion auf eines oder mehrere von Folgendem umfasst:

Speichern des Content-Objekts in einem Cachespeicher;

Empfangen eines Interesses, dessen Name mit einem Namen oder Namenspräfix des Content-Objekts übereinstimmt; und

Empfangen eines Interesses, das eine Ausnahme für das Content-Objekt einschließt.

5. Computersystem gemäß Anspruch 3, das ferner Folgendes umfasst:

Bestimmen, dass das Content-Objekt ein neues Content-Objekt ist; und

Zuordnen eines maximalen Einordnungswerts zu dem Content-Objekt.

6. Computersystem gemäß Anspruch 4, wobei das Bestimmen, dass das Content-Objekt ein neues Content-Objekt ist, eines oder mehrere von Folgendem beinhaltet:

Bestimmen, dass das Content-Objekt nicht zurückgegeben wurde, um ein Interesse zu befriedigen; und

Bestimmen, dass für das Content-Objekt keine Exklusion empfangen wurde.

7. Computersystem gemäß Anspruch 3, das ferner das Auswählen, aus einem Satz vorgegebener Exklusionsmuster, von einem oder mehreren Exklusionsmustern für das Einordnen des Content-Objekts umfasst, einschließlich mindestens einem von Folgendem:

ein Exklusionsratenmuster, das das Content-Objekt basierend auf einer Rate einordnet, mit der das Content-Objekt Exklusionen empfing;

ein Zeitverteilungsmuster, das das Content-Objekt basierend auf einer Zeit einordnet, die verstrichen ist, seit das Content-Objekt eine Exklusion empfing; und

ein Exkludierungsschnittstellenmuster, das das Content-Objekt basierend auf einen Anteil von lokalen Schnittstellen einordnet, von denen das Content-Objekt Exklusionen empfing.

8. Computersystem gemäß Anspruch 3, wobei das Berechnen des Einordnungswerts Folgendes beinhaltet:

Berechnen eines Faktors für jedes Exklusionsmuster, basierend auf dem Satz Exklusionen für das Content-Objekt;

Berechnen eines Gesamtfaktors, $F$, basierend auf den einzelnen Faktoren für jedes Exklusionsmuster; und Berechnen des Einordnungswerts unter Verwendung des Gesamtfaktors, $F$.

9. Computersystem gemäß Anspruch 8, wobei das Berechnen des Einordnungswerts ferner das Berechnen von Folgendem beinhaltet:

$$r_{n\backslash H(C)}(t) = e^{\frac{-t}{F}}$$

wobei $r_{n\backslash H(C)}$ den Einordnungswert für das Content-Objekt bezeichnet und wobei $t$ das Alter des Content-Objekts in dem Cachespeicher bezeichnet.

## Revendications

1. Procédé mis en oeuvre par ordinateur, consistant à :

sélectionner dans un réseau centré sur les informations (ICN) un objet de contenu à classer ;
analyser, par un dispositif de transfert, une information d'utilisation historique pour l'objet de contenu ;
déterminer, à partir de l'information d'utilisation historique, un ensemble d'exclusions reçues pour l'objet de contenu, chaque exclusion ayant trait à un intérêt incluant une exclusion pour l'objet de contenu renvoyé en réponse à l'intérêt ;
calculer une valeur de classement pour l'objet de contenu, sur la base de l'ensemble d'exclusions pour l'objet de contenu et d'un ou plusieurs schémas d'exclusion prédéterminés ;
stocker la valeur de classement en association avec l'objet de contenu ;
recevoir un intérêt dont le nom est associé à de multiples objets de contenu mis en cache ;
sélectionner, parmi les multiples objets de contenu mis en cache, un objet de contenu mis en cache avec une valeur de classement maximale ; et
renvoyer l'objet de contenu mis en cache sélectionné pour satisfaire à l'intérêt.

2. Support de stockage non temporaire lisible par ordinateur stockant des instructions qui, lorsqu'elles sont exécutées par un ordinateur, amènent l'ordinateur à réaliser un procédé consistant à :

sélectionner dans un réseau centré sur les informations (ICN) un objet de contenu à classer ;
analyser, par un dispositif de transfert, une information d'utilisation historique pour l'objet de contenu ;
déterminer, à partir de l'information d'utilisation historique, un ensemble d'exclusions reçues pour l'objet de contenu, chaque exclusion ayant trait à un intérêt incluant une exclusion pour l'objet de contenu renvoyé en réponse à l'intérêt ;
calculer une valeur de classement pour l'objet de contenu, sur la base de l'ensemble d'exclusions pour l'objet de contenu et d'un ou plusieurs schémas d'exclusion prédéterminés ;
stocker la valeur de classement en association avec l'objet de contenu ;
recevoir un intérêt dont le nom est associé à de multiples objets de contenu mis en cache ;
sélectionner, parmi les multiples objets de contenu mis en cache, un objet de contenu mis en cache avec une valeur de classement maximale ; et
renvoyer l'objet de contenu mis en cache sélectionné pour satisfaire à l'intérêt.

**3.** Système informatique, comprenant :

un ou plusieurs processeurs ;
une mémoire ; et
un support lisible par ordinateur couplé au ou aux processeurs, stockant des instructions stockées qui, lorsqu'elles sont exécutées par le ou les processeurs, amènent le système informatique à réaliser un procédé consistant à :

sélectionner dans un réseau centré sur les informations (ICN) un objet de contenu à classer ;
analyser, par un dispositif de transfert, une information d'utilisation historique pour l'objet de contenu ;
déterminer, à partir de l'information d'utilisation historique, un ensemble d'exclusions reçues pour l'objet de contenu, chaque exclusion ayant trait à un intérêt incluant une exclusion pour l'objet de contenu renvoyé en réponse à l'intérêt ;
calculer une valeur de classement pour l'objet de contenu, sur la base de l'ensemble d'exclusions pour l'objet de contenu et d'un ou plusieurs schémas d'exclusion prédéterminés ;
stocker la valeur de classement en association avec l'objet de contenu ;
recevoir un intérêt dont le nom est associé à de multiples objets de contenu mis en cache ;
sélectionner, parmi les multiples objets de contenu mis en cache, un objet de contenu mis en cache avec une valeur de classement maximale ; et
renvoyer l'objet de contenu mis en cache sélectionné pour satisfaire à l'intérêt.

**4.** Système informatique selon la revendication 3, consistant en outre à sélectionner l'objet de contenu à classer en réponse à une ou plusieurs actions consistant à :

stocker l'objet de contenu dans une mémoire cache ;
recevoir un intérêt dont le nom concorde avec un nom ou un préfixe de nom de l'objet de contenu ; et
recevoir un intérêt qui inclut une exception pour l'objet de contenu.

**5.** Système informatique selon la revendication 3, comprenant en outre :

déterminer que l'objet de contenu est un nouvel objet de contenu ; et
attribuer une valeur de classement maximale à l'objet de contenu.

**6.** Système informatique selon la revendication 4, dans lequel la détermination que l'objet de contenu est un nouvel objet de contenu comprend une ou plusieurs des actions suivantes consistant à :

déterminer que l'objet de contenu n'a pas été renvoyé pour satisfaire à un intérêt ; et
déterminer qu'une exclusion n'a pas été reçue pour l'objet de contenu.

**7.** Système informatique selon la revendication 3, consistant en outre à sélectionner un ou plusieurs schémas d'exclusion pour classer l'objet de contenu, à partir d'un ensemble de schémas d'exclusion prédéterminés incluant au moins un schéma parmi :

un schéma de taux d'exclusion qui classe l'objet de contenu sur la base d'un taux auquel l'objet de contenu a reçu des exclusions ;
un schéma de distribution en fonction du temps qui classe l'objet de contenu sur la base d'un temps écoulé depuis que l'objet de contenu a reçu une exclusion ; et
un schéma d'interfaces d'exclusion qui classe l'objet de contenu sur la base d'une fraction d'interfaces locales à partir desquelles l'objet de contenu a reçu des exclusions.

**8.** Système informatique selon la revendication 3, dans lequel le calcul de la valeur de classement consiste à :

calculer un facteur pour chaque schéma d'exclusion, sur la base de l'ensemble d'exclusions pour l'objet de contenu ;
calculer un facteur global, $F$, sur la base des facteurs individuels pour chaque schéma d'exclusion ; et
calculer la valeur de classement au moyen du facteur global, $F$.

**9.** Système informatique selon la revendication 8, dans lequel le calcul de la valeur de classement consiste en outre à calculer :

$$r_{n \backslash H(C)}(t) = e^{\frac{-t}{F}}$$

où $r_{n \backslash H(C)}$ désigne la valeur de classement pour l'objet de contenu, et où $t$ désigne l'âge de l'objet de contenu dans la mémoire cache.

ENVIRONMENT
100

NAMED DATA
NETWORK 102

CONTENT PRODUCER
106

REPO

PIT
CS
FIB
EDGE NODE
104.2

PIT
FIB
ROUTING
NODE 104.4

PIT
CS
FIB
EDGE NODE
104.1

PIT
FIB
EDGE NODE
104.5

PIT
CS
FIB
EDGE NODE
104.3

CLIENT
108

FIG. 1

INTEREST
200

| Name 202 |
|---|
| MinSuffixComponents 204 |
| MaxSuffixComponents 206 |
| Exclude 208 |

## FIG. 2A

CONTENT OBJECT
250

| Name 252 |
|---|
| Freshness 254 |
| Payload 256 |
| Signature 258 |

## FIG. 2B

```
                              ┌──────────┐
                              │  START   │
                              └────┬─────┘
                                   │
                                   ▼
        ┌──────────────────────────────────────────────────────────┐
        │              RECEIVE AN INTEREST                          │
        │                    302                                    │
        └────────────────────────┬─────────────────────────────────┘
                                 │
                                 ▼
        ┌──────────────────────────────────────────────────────────┐
        │ PERFORM A LONGEST-PREFIX-MATCHING LOOKUP IN A CONTENT     │
        │ STORE (CS) FOR ONE OR MORE CONTENT OBJECTS THAT SATISFY   │
        │ THE INTEREST                                              │
        │                    304                                    │
        └────────────────────────┬─────────────────────────────────┘
                                 │
                                 ▼
                         ◇ NUMBER OF ◇
         ZERO            MATCHING CONTENT          MORE THAN ONE
     ◄─────────────────  OBJECTS?          ─────────────────────►
                             306
```

— 300

**RECEIVE AN INTEREST**
302

**PERFORM A LONGEST-PREFIX-MATCHING LOOKUP IN A CONTENT STORE (CS) FOR ONE OR MORE CONTENT OBJECTS THAT SATISFY THE INTEREST**
304

**NUMBER OF MATCHING CONTENT OBJECTS?**
306

ZERO — **PERFORM A LONGEST-PREFIX MATCHING LOOKUP IN A FIB TO SELECT AN INTERFACE ASSOCIATED WITH THE INTEREST'S NAME** 308

**FORWARD THE INTEREST VIA THE SELECTED INTERFACE** 310

ONE — **DETERMINE AN INTERFACE FROM WHICH THE INTEREST ARRIVED** 312

**RETURN THE MATCHING CONTENT OBJECT VIA THE INTERFACE** 314

MORE THAN ONE — **DETERMINE A RANK FOR EACH OF THE MATCHING CONTENT OBJECTS** 316

**SELECT A HIGHEST-RANKED CONTENT OBJECT FROM THE SET OF MATCHING CONTENT OBJECTS** 318

**DETERMINE AN INTERFACE FROM WHICH THE INTEREST ARRIVED** 320

**RETURN THE HIGHEST-RANKED MATCHING CONTENT OBJECT VIA THE INTERFACE** 322

**END**

## FIG. 3

400

START

SELECT A CONTENT OBJECT FOR WHICH TO COMPUTE A RANK VALUE
402

IS THE
CONTENT OBJECT
NEW?
404

YES

NO

ASSIGN AN INITIAL RANK VALUE
TO THE CONTENT OBJECT
406

ANALYZE HISTORICAL USAGE
INFORMATION FOR
THE CONTENT OBJECT
410

DETERMINE A SET OF EXCLUSIONS
RECEIVED FOR THE CONTENT OBJECT
412

COMPUTE AN UPDATED RANK VALUE
FOR THE CONTENT OBJECT BASED ON
THE EXCLUSIONS AND ONE OR MORE
EXCLUSION PATTERNS
414

STORE THE RANK VALUE
IN ASSOCIATION WITH
THE CONTENT OBJECT
408

END

**FIG. 4**

500

START

SELECT ONE OR MORE EXCLUSION PATTERNS TO CONSIDER
502

ACCOUNTING FOR AN EXCLUSION RATE?
504

YES → COMPUTE AN EXLUSION-RATE FACTOR, $\alpha$
506

INCORPORATE THE EXLUSION-RATE FACTOR, $\alpha$, INTO AN OVERALL FACTOR, $F$
508

NO

ACCOUNTING FOR A TIME DISTRIBUTION?
510

YES → COMPUTE AN INFLUENCE FACTOR, $i_{n|H(C)}(t_e)$
512

INCORPORATE THE INFLUENCE FACTOR, $i_{n|H(C)}(t_e)$, INTO THE OVERALL FACTOR, $F$
514

NO

ACCOUNTING FOR AN EXCLUDING-INTERFACES RATIO?
516

YES → COMPUTE AN EXCLUDING-INTERFACES FACTOR, $e_{n|H(C)}$
518

INCORPORATE THE EXCLUDING-INTERFACES FACTOR, $e_{n|H(C)}$, INTO THE OVERALL FACTOR, $F$
520

NO

COMPUTE THE CONTENT OBJECT'S RANK VALUE BASED ON THE OVERALL FACTOR, $F$
522

END

**FIG. 5**

**FIG. 6A**

FIG. 6B

APPARATUS 700

COMMUNICATION
MODULE
702

CACHE MODULE
704

RANK-COMPUTING
MODULE
706

RANK STORAGE
MODULE
708

INTEREST PROCESSING
MODULE
710

FIG. 7

DISPLAY
810

COMPUTER SYSTEM 802

PROCESSOR
804

MEMORY
806

STORAGE
DEVICE
808

KEYBOARD
812

POINTING
DEVICE
814

OPERATING SYSTEM
816

CONTENT CACHING
SYSTEM
818

COMMUNICATION MODULE
820

CACHE MODULE
822

RANK-COMPUTING
MODULE
824

RANK STORAGE
MODULE
826

INTEREST PROCESSING
MODULE
828

DATA
830

FIG. 8

**EP 3 010 201 B1**

**REFERENCES CITED IN THE DESCRIPTION**

**Patent documents cited in the description**

- US 20140281505 A
- US 20130148653 A
- US 84781413 A
- US 33817508 A